# EUROPÄISCHE PATENTSCHRIFT

(11) **EP 3 917 069 B1**
(45) Veröffentlichungstag und Bekanntmachung des Hinweises auf die Patenterteilung: **31.08.2022**
(21) Anmeldenummer: 21175270.4
(22) Anmeldetag: 21.05.2021
(51) Int. Cl.: H04L 9/06, H04L 9/32

(54) **VERFAHREN ZUM SYNCHRONISIEREN EINES EMPFÄNGER-INITIALISIERUNGSVEKTORS MIT EINEM SENDER-INITIALISIERUNGSVEKTOR**
METHOD FOR SYNCHRONIZING A RECEIVER INITIALIZATION VECTOR WITH A TRANSMITTER INITIALIZATION VECTOR
PROCÉDÉ DE SYNCHRONISATION D'UN VECTEUR D'INITIALISATION DE RÉCEPTEUR AVEC UN VECTEUR D'INITIALISATION D'ÉMETTEUR

(30) Priorität: 26.05.2020 DE 102020114081
(43) Veröffentlichungstag der Anmeldung: 01.12.2021
(73) Patentinhaber: Krohne Messtechnik GmbH, 47058 Duisburg (DE)
(72) Erfinder: Weßkamp, Patrick, 45478 Mülheim (DE)
(74) Vertreter: Gesthuysen Patentanwälte

(56) Entgegenhaltungen:
- TENG WU ET AL: "The weakness of integrity protection for LTE", SECURITY AND PRIVACY IN WIRELESS AND MOBILE NETWORKS, ACM, 2 PENN PLAZA, SUITE 701 NEW YORK NY 10121-0701 USA, 17. April 2013 (2013-04-17), Seiten 79-88, XP058015337, DOI: 10.1145/2462096.2462110 ISBN: 978-1-4503-1998-0

## Beschreibung

Die Erfindung betrifft ein Verfahren zum Synchronisieren eines Empfänger-Initialisierungsvektors eines Empfängers mit einem Sender-Initialisierungsvektor eines Senders bei fortlaufender Übertragung von verschlüsselten Datenpaketen vom Sender zum Empfänger.

Dazu wird zunächst zum einen ein Schlüssel und zum anderen ein Initialisierungsvektor mit einem Zähler mit N Bit erzeugt. Der Initialisierungsvektor weist demnach einen Zähler mit N Bit auf. Der Zähler ist damit ein N-Bit-Zähler. N ist dabei eine ganze Zahl größer als Null.

Der Schlüssel wird dem Sender und dem Empfänger vorgegeben und der Sender-Initialisierungsvektor und der Empfänger-Initialisierungsvektor werden mit dem Initialisierungsvektor initialisiert. Das bedeutet insbesondere, dass der Sender-Initialisierungsvektor einen Sender-Zähler und der Empfänger-Initialisierungsvektor einen Empfänger-Zähler gemäß dem Zähler des Initialisierungsvektors aufweisen. Zunächst weisen der Sender-Initialisierungsvektor und der Empfänger-Initialisierungsvektor den Wert des Initialisierungsvektors auf.

Vom Sender werden bei jeder Übertragung eines Datenpakets im Stand der Technik die folgenden Schritte ausgeführt:
- Eine Nachricht wird gemäß einem Verschlüsselungsverfahren unter Verwendung des Schlüssels und des Sender-Initialisierungsvektors zur Gewährleistung von Vertraulichkeit verschlüsselt.
- Ein Datenpaket wird mit der verschlüsselten Nachricht und dem Sender-Zähler erzeugt und gesendet.
- Danach wird der Sender-Zähler des Sender-Initialisierungsvektors inkrementiert.

Vom Empfänger werden bei jeder Übertragung eines Datenpakets im Stand der Technik die folgenden Schritte ausgeführt:
- Ein Datenpaket mit einer Nachricht und einem Sender-Zähler wird empfangen.
- Der Sender-Zähler wird aus dem Datenpaket extrahiert.
- Der Empfänger-Zähler wird mit dem Sender-Zähler aktualisiert.
- Die Nachricht wird gemäß dem Verschlüsselungsverfahren unter Verwendung des Schlüssels und des Empfänger-Initialisierungsvektors entschlüsselt.

Die fortlaufende Übertragung erfolgt, indem der Sender und der Empfänger die vorstehend beschriebenen Schritte fortlaufend ausführen. Eine Übertragung umfasst das Senden und Empfangen.

Da der Sender und der Empfänger den gleichen Schlüssel verwenden, handelt es sich bei dem Verschlüsselungsverfahren um ein symmetrisches Verschlüsselungsverfahren. Der Schlüssel muss zur Gewährleistung von Vertraulichkeit geheim sein, wohingegen der Zähler bekannt sein darf. Die unverschlüsselte Übertragung eines Zählers bedeutet demnach keine Beeinträchtigung der Vertraulichkeit einer Nachricht, welche unter Verwendung des Zählers verschlüsselt worden ist.

Eine Nachricht ist zur Gewährleistung von Vertraulichkeit unter Verwendung einer einzigartigen Kombination aus dem Schlüssel und dem Sender-Initialisierungsvektor zu verschlüsseln. Eine Einzigartigkeit der Kombination wird gewährleistet, indem der Sender-Zähler im Sender-Initialisierungsvektor wie beschrieben nach jeder Verschlüsselung einer Nachricht inkrementiert wird. Ein erfolgreiches Entschlüsseln einer Nachricht erfordert, dass der Empfänger-Initialisierungsvektor gleich dem Sender-Initialisierungsvektor ist. Das ist vorliegend gegeben, wenn der Empfänger-Zähler gleich dem Sender-Zähler ist, der zur Verschlüsselung der Nachricht verwendet worden ist, da gegebenenfalls vorhandene weitere Komponenten des Empfänger- und des Sender-Initialisierungsvektors konstant sind. Die Gleichheit von Sender- und Empfänger-Zähler wird gewährleistet, indem der Sender-Zähler zusammen mit der verschlüsselten Nachricht in einem Datenpaket gesendet und der Empfänger-Zähler mit dem Sender-Zähler aktualisiert wird. Auf diese Weise wird im Stand der Technik der Empfänger-Initialisierungsvektor mit dem Sender-Initialisierungsvektor synchronisiert.

Das aus dem Stand der Technik bekannte Verfahren weist jedoch Nachteile auf. Das Übertragen des Sender-Zählers mit jedem Datenpaket vergrößert zum einen die Größe des Datenpakets und erhöht zum anderen die Energie, die zum Übertragen des Datenpakets notwendig ist. TENG WU ET AL: "The weakness of integrity protection for LTE",SECURITY AND PRIVACY IN WIRELESS AND MOBILE NETWORKS, ACM, 2 PENN PLAZA, SUITE 701 NEW YORK NY 10121-0701 USA, 17. April 2013 (2013-04-17), Seiten 79-88 implementiert einen AES mit counter-mode und MAC.

Eine Aufgabe der vorliegenden Erfindung ist daher die Angabe eines Verfahrens zum fortlaufenden Synchronisieren des Empfänger-Initialisierungsvektors mit dem Sender-Initialisierungsvektor, bei dem die zuvor aufgezeigten Nachteile zumindest abgemildert sind.

Die Aufgabe wird durch ein Verfahren gemäß Patentanspruch 1 gelöst. Das Verfahren modifiziert das aus dem Stand der Technik bekannte Verfahren, wie im Folgenden beschrieben.

Vom Sender werden bei jeder Übertragung eines Datenpakets die folgenden Schritte ausgeführt:
- Ein Sender-Teilzähler wird mit den niedrigstwertigen M Bit kleiner als N Bit aus dem Zähler des Sender-Initialisierungsvektors, also dem Sender-Zähler, gebildet. Der Sender-Teilzähler ist damit ein M-Bit-Zähler. M ist dabei eine ganze Zahl größer als Null und kleiner als N.
- Eine Nachricht wird gemäß dem Verschlüsselungsverfahren unter Verwendung des Schlüssels und des Sender-Initialisierungsvektors zur Gewährleistung von Vertraulichkeit verschlüsselt.
- Ein Datenpaket wird mit der verschlüsselten Nachricht und dem Sender-Teilzähler erzeugt und gesendet.
- Danach wird der Zähler des Sender-Initialisierungsvektors inkrementiert.

Vom Empfänger werden bei jeder Übertragung eines Datenpakets die folgenden Schritte ausgeführt:
- Ein Datenpaket mit einer verschlüsselten Nachricht und einem Sender-Teilzähler wird empfangen.
- Der Sender-Teilzähler wird aus dem Datenpaket extrahiert.
- Ein Empfänger-Teilzähler mit den niedrigstwertigen M Bit kleiner als N Bit wird aus dem Zähler des Empfänger-Initialisierungsvektors, also dem Empfänger-Zähler, gebildet.
- Ein Vergleich zwischen dem Empfänger-Teilzähler und dem Sender-Teilzähler wird durchgeführt. Bei dem Vergleich werden demnach die Werte vom Empfänger- und Sender-Teilzähler verglichen.
- Wenn der Vergleich einen höheren Sender-Teilzähler als Empfänger-Teilzähler ergibt, werden die niedrigstwertigen M Bit des Zählers des Empfänger-Initialisierungsvektors durch den Sender-Teilzähler ersetzt. Dieses Vergleichsergebnis wird im Folgenden auch als Vergleichsergebnis A bezeichnet.
- Wenn der Vergleich einen niedrigeren Sender-Teilzähler als Empfänger-Teilzähler ergibt, werden die niedrigstwertigen M Bit des Zählers des Empfänger-Initialisierungsvektors durch den Sender-Teilzähler ersetzt und wird der Wert des Zählers des Empfänger-Initialisierungsvektors danach um 2^{M} erhöht. Dieses Vergleichsergebnis wird im Folgenden auch als Vergleichsergebnis B bezeichnet.
- Danach wird die Nachricht gemäß dem Verschlüsselungsverfahren unter Verwendung des Schlüssels und des Empfänger-Initialisierungsvektors entschlüsselt und dann wird der Zähler des Empfänger-Initialisierungsvektors inkrementiert.

Neben einem höheren (Vergleichsergebnis A) und niedrigeren (Vergleichsergebnis B) Sender- als Empfänger-Teilzähler ist das dritte mögliche Ergebnis des Vergleichs, dass der Sender- und der Empfänger-Teilzähler gleich sind. Dieses Vergleichsergebnis wird im Folgenden auch als Vergleichsergebnis C bezeichnet und erfordert im Gegensatz zu den Vergleichsergebnissen A und B keine weiteren Schritte, da der Empfänger-Zähler bereits den richtigen Wert aufweist.

Die unten stehende Tabelle zeigt ein Beispiel einer fortlaufenden Sendung von Datenpaketen vom Sender zum Empfänger für einen Zähler mit N = 16 Bit, weshalb auch der Sender- und der Empfänger-Zähler jeweils 16-Bit-Zähler sind, und mit M = 8 Bit, weshalb der Sender- und der Empfänger-Teilzähler jeweils 8-Bit-Zähler sind. Zahlen, die mit einem tiefgestellten "b" enden, sind Binärzahlen und Zahlen, die mit einem tiefgestellten "d" enden, sind Dezimalzahlen. Jedes vom Empfänger empfangenes Datenpaket wird im Beispiel erfolgreich entschlüsselt. Eine Übertragung eines Datenpakets ist dann erfolgreich, wenn es nicht nur gesendet, sondern auch empfangen wird.

| Sender-Zähler | Sender-Teilzähler | Übertragung | Empfänger-Zähler | Empfänger-Teilzähler | Vergleichsergebnis |
|---|---|---|---|---|---|
| 1,1111,1101b = 509_{d} | 1111,1101b = 253_{d} | erfolgreich | 1,1111,1101_{b} = 509_{d} | 1111,1101_{b} = 253_{d} | C |
| 1,1111,1110_{b} = 510_{d} | 1111,1110_{b} = 254_{d} | erfolgreich | 1,1111,1110_{b}, = 510_{d} | 1111,1110_{b}, = 254_{d} | C |
| 1,1111,1111b = 511_{d} | 1111,1111_{b} = 255_{d} | nicht erfolgreich | 1,1111,1111_{b} = 511_{d} | 1111,111_{1b} = 255_{d} | kein Vergleichsergebnis |
| 10,0000,0000_{b} = 512_{d} | 0_{b} = 0_{d} | nicht erfolgreich | 1,1111,1111_{b} = 511_{d} | 1111,1111_{b} = 255_{d} | kein Vergleichsergebnis |
| 10,0000,0001_{b} = 513_{d} | 1_{b} = 1_{d} | erfolgreich | Bei Vergleich: 1,1111,1111_{b} = 511_{d} Synchronisierung: 1,0000,0001_{b} + 1,0000,0000_{b} = 10,0000,0001_{b} = 257_{d} + 2⁸_{d} = 513_{d} | Bei Vergleich: 1111,1111_{b} = 255_{d} | B |
| 10,0000,0010_{b} = 514_{d} | 10_{b} = 2_{d} | erfolgreich | 10,0000,0010_{b} = 514_{d} | 10_{b} = 2_{d} | C |
| 10,0000,0011_{b} = 515_{d} | 11_{b} = 3_{d} | nicht erfolgreich | 10,0000,0011_{b} = 515_{d} | 11_{b} = 3_{d} | kein Vergleichsergebnis |
| 10,0000,0100_{b} = 516_{d} | 100_{b} = 4_{d} | erfolgreich | Bei Vergleich: 10,0000,0011_{b} = 515_{d} Synchronisierung: 10,0000,0100_{b} = 516_{d} | Bei Vergleich: 11_{b} = 3_{d} | A |

In Zeile 1 ist die Übertragung des Datenpakets vom Sender zum Empfänger erfolgreich, weshalb der Vergleich zwischen dem Empfänger- und dem Sender-Teilzähler das Vergleichsergebnis A liefert. Abschließend wird auf der Seite des Senders der Sender-Zähler inkrementiert. Auf der Seite des Empfängers wird abschließend der Empfänger-Zähler inkrementiert, da ein Datenpaket empfangen worden ist. Wenn kein Datenpaket empfangen wird, dann wird der Empfänger-Zähler nicht inkrementiert. Die inkrementierten Zähler werden erst in der jeweils folgenden Zeile, hier Zeile 2, dargestellt.

In Zeile 2 ist die Übertragung ebenfalls erfolgreich, weshalb das Gleiche wie in Zeile 1 ausgeführt wird.

In Zeile 3 ist die Übertragung nicht erfolgreich, da ein Datenpaket zwar vom Sender gesendet, jedoch nicht vom Empfänger empfangen wird. Deshalb wird auch der Vergleich nicht durchgeführt und wird zwar der Sender- nicht aber der Empfänger-Zähler inkrementiert.

In Zeile 4 ist die Übertragung ebenfalls nicht erfolgreich, weshalb das Gleiche wie in Zeile 3 ausgeführt wird.

In Zeile 5 ist die Übertragung erfolgreich. Der Sender-Zähler hat den Wert 513_{d} und der Sender-Teilzähler den Wert 1_{d}. Aufgrund der zwei vorangehenden nicht erfolgreichen Übertragungen hat der Empfänger-Zähler nur den Wert 511_{d} und der Empfänger-Teilzähler den Wert 255_{d}. Deshalb liefert der Vergleich das Vergleichsergebnis B. Dabei wird der Empfänger-Zähler mit dem Sender-Zähler synchronisiert, indem die niedrigstwertigen 8 Bit des Empfänger-Zählers (1111,1111_{b}) durch den Sender-Teilzähler (0000,0001_{b}) ersetzt werden und anschließend der Empfänger-Zähler um 2⁸_{d} = 256_{d} erhöht wird. Nach der Synchronisierung wird das Datenpaket erfolgreich entschlüsselt. Abschließend wird auf der Seite des Senders der Sender-Zähler inkrementiert. Auf der Seite des Empfängers wird der Empfänger-Zähler inkrementiert, da ein Datenpaket empfangen worden ist.

In Zeile 6 ist die Übertragung erfolgreich, weshalb das Gleiche wie in den Zeilen 1 und 2 ausgeführt wird.

In Zeile 7 ist die Übertragung nicht erfolgreich, weshalb das Gleiche wie in den Zeilen 3 und 4 ausgeführt wird.

In Zeile 8 war die Übertragung erfolgreich. Der Sender-Zähler hat den Wert 516_{d} und der Sender-Teilzähler den Wert 4_{d}. Aufgrund der vorangehenden nicht erfolgreichen Übertragung hat der Empfänger-Zähler nur den Wert 515_{d} und der Empfänger-Teilzähler den Wert 3_{d}. Deshalb liefert der Vergleich das Vergleichsergebnis A. Dabei wird der Empfänger-Zähler mit dem Sender-Zähler synchronisiert, indem die niedrigstwertigen 8 Bit des Empfänger-Zählers (0000,0011_{b}) durch den Sender-Teilzähler (0000,0100_{b}) ersetzt werden. Abschließend wird auf der Seite des Senders der Sender-Zähler inkrementiert. Auf der Seite des Empfängers wird abschließend der Empfänger-Zähler inkrementiert, da ein Datenpaket empfangen worden ist.

Das erfindungsgemäße Verfahren hat gegenüber dem aus dem Stand der Technik bekannten Verfahren den Vorteil, dass zur Synchronisierung von Empfänger- und Sender-Initialisierungsvektor nicht mehr der Sender-Zähler im Datenpaket übertragen werden muss, sondern ein kleinerer Sender-Teilzähler ausreichend ist. Dadurch wird die Größe des Datenpakets verringert und die Energie, die zum Übertragen des Datenpakets notwendig ist, reduziert. Das trifft insbesondere in Bezug auf auf andere auf Anwendungsebene laufende Verfahren aus dem Stand der Technik zu. Auch gewährleistet das Verfahren eine Synchronisierung nach nicht erfolgreichen Übertragungen.

Es besteht die Möglichkeit, dass die Übertragung von mehr als 2^{M} Datenpaketen nicht erfolgreich ist. In diesem Fall ist die Entschlüsselung zunächst nicht erfolgreich. Deshalb wird in einer Ausgestaltung des Verfahrens vom Empfänger zunächst überprüft, ob die Entschlüsselung erfolgreich ist. Wenn die Entschlüsselung nicht erfolgreich ist, wird vom Empfänger der Wert des Zählers des Empfänger-Initialisierungsvektors um weitere 2^{M} erhöht und die Nachricht dann erneut gemäß dem Verschlüsselungsverfahren unter Verwendung des Schlüssels und des Empfänger-Initialisierungsvektors entschlüsselt.

Der Schlüssel und der Initialisierungsvektor müssen dem Sender und dem Empfänger vorgegeben werden. In einer Ausgestaltung des Verfahrens werden von einem Initialisierer der Schlüssel und der Initialisierungsvektor erzeugt und dem Sender und dem Empfänger vorgegeben. Der Initialisierer ist zum Beispiel neben dem Sender und dem Empfänger ein weiteres Gerät. Alternativ dazu ist der Initialisierer zum Beispiel im Sender oder im Empfänger implementiert und der Austausch des Schlüssels und/oder des Initialisierungsvektors zwischen dem Sender und dem Empfänger erfolgt gemäß einem Public-Key-Verfahren.

In einer Ausgestaltung des Verfahrens setzt das Verschlüsselungsverfahren einen Advanced Encryption Standard um. Advanced Encryption Standard wird mit AES abgekürzt.

In einer Ausgestaltung des Verfahrens werden vom Sender zum einen ein Nachrichten-Authentifizierungscode für die Nachricht zur Gewährleistung von Authentizität und/oder Integrität der Nachricht und zum anderen das Datenpaket mit dem Nachrichten-Authentifizierungscode erzeugt. Vom Empfänger werden bzw. wird dementsprechend Authentizität und/oder Integrität der Nachricht durch Auswertung des Nachrichten-Authentifizierungscodes überprüft. Demnach weist das Datenpaket gemäß dieser Ausgestaltung neben der Nachricht und dem Sender-Teilzähler auch den Nachrichten-Authentifizierungscode auf. Dieser wird auch als Message Authentication Code bezeichnet und mit MAC abgekürzt.

In einer zur vorstehenden Ausgestaltung alternativen Ausgestaltung werden vom Sender zum einen ein Nachrichten-Authentifizierungscode für die Nachricht und den Sender-Teilzähler zur Gewährleistung von Authentizität und/oder Integrität der Nachricht und des Sender-Teilzählers und zum anderen das Datenpaket mit dem Nachrichten-Authentifizierungscode erzeugt. Vom Empfänger werden bzw. wird dementsprechend Authentizität und/oder Integrität der Nachricht und des Sender-Teilzählers durch Auswertung des Nachrichten-Authentifizierungscodes überprüft. Im Gegensatz zur vorstehenden Ausgestaltung wird bei dieser Ausgestaltung der Nachrichten-Authentifizierungscode nicht nur für die Nachricht, sondern für die Nachricht und den Sender-Teilzähler zusammen erzeugt. Dadurch wird nicht nur sichergestellt, dass eine Manipulation der Nachricht, sondern auch eine Manipulation des Sender-Teilzählers entdeckt wird.

In einer Weiterbildung der beiden vorstehenden alternativen Ausgestaltungen werden vom Sender und vom Empfänger zur Erzeugung und Überprüfung des Nachrichten-Authentifizierungscodes ein CCM- oder ein GCM-Modus, vorzugsweise mit einem AES, umgesetzt.

Ein CCM-Modus ist ein Betriebsmodus für eine Blockchiffre, welcher aus dieser ein Authenticated-Encryption-Verfahren macht, das Vertraulichkeit und Integrität einer Nachricht gewährleistet. Ein CCM-Modus kombiniert einen Counter-Modus zur Verschlüsselung mit einem CBC-MAC-Modus zur Gewährleistung von Integrität. Ein Counter-Modus ist eine Betriebsart einer Blockchiffre, in welcher diese eine Stromchiffre erzeugt. Ein CBC-MAC-Modus sieht vor, dass ein Cipher-Block-Chaining-Modus, der mit CBC-Modus abgekürzt wird, zur Gewährleistung von Integrität einer Nachricht benutzt wird, indem sein Initialisierungsvektor auf Null gesetzt und der letzte im CBC-Modus verschlüsselte Block oder ein Teil von diesem als MAC dem Datenpaket hinzugefügt wird.

Ein GCM-Modus ist ein Betriebsmodus, in dem eine Blockchiffre für eine symmetrische Verschlüsselung einer Nachricht betrieben werden kann. Dieser stellt eine authentifizierte Verschlüsselungsmethode für Nachrichten bereit, welche sowohl Authentizität als auch Vertraulichkeit gewährleistet. GCM-Modus steht für Galois-Counter-Modus.

In einer Ausgestaltung des Verfahrens wird der Initialisierungsvektor mit einer Nonce zur Verbesserung der Gewährleistung der Vertraulichkeit bzw. der Authentizität und Integrität erzeugt. Eine Nonce ist eine möglichst zufällige Zeichenkombination. In dieser Ausgestaltung weist der Initialisierungsvektor demnach neben dem Zähler die Nonce auf. Durch die Nonce im Initialisierungsvektor werden Precomputation-Angriffe erschwert. Nach der Initialisierung des Sender- und des Empfänger-Initialisierungsvektors mit dem Initialisierungsvektor weisen beide Initialisierungsvektoren ebenfalls die Nonce auf.

In einer Ausgestaltung des Verfahrens wird zur Übertragung von Datenpaketen vom Sender zum Empfänger eine Funktechnik, vorzugsweise Bluetooth Low Energy, verwendet. Bluetooth Low Energy ist in einer Bluetooth-Spezifikation beschrieben, z. B. in einer Bluetooth-5-Spezifikation. Bluetooth Low Energy wird mit BLE abgekürzt. Diese Ausgestaltung ist besonders vorteilhaft, da ein Ziel von BLE die Übertragung von Datenpaketen unter Verwendung von möglichst wenig Energie ist und das Verfahren die benötigte Energie im Vergleich zum Stand der Technik reduziert.

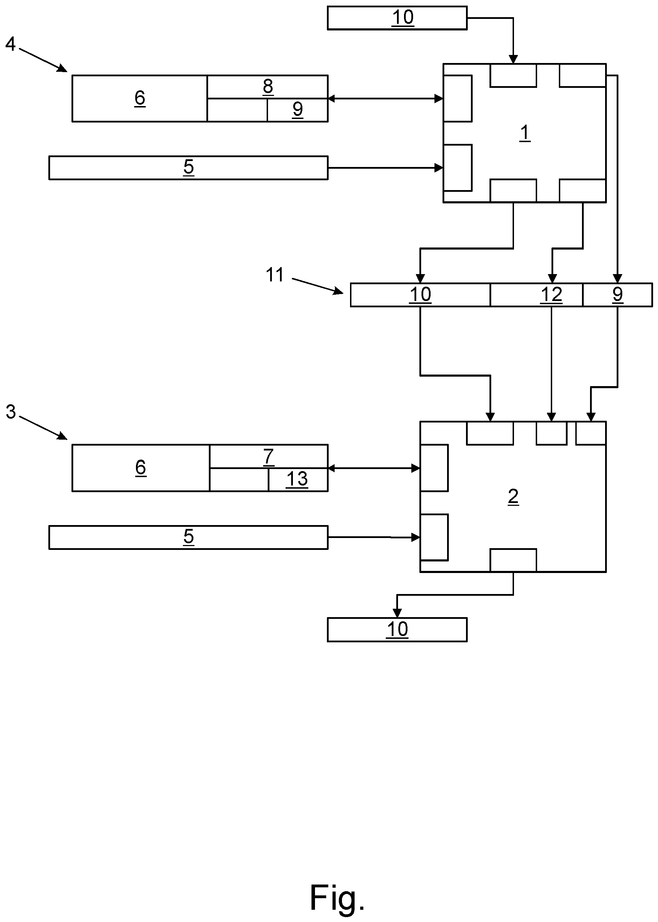

Im Einzelnen ist eine Vielzahl von Möglichkeiten gegeben, das Verfahren auszugestalten und weiterzubilden. Dazu wird verwiesen sowohl auf die dem Patentanspruch 1 nachgeordneten Patentansprüche als auch auf die nachfolgende Beschreibung eines bevorzugten Ausführungsbeispiels in Verbindung mit der Figur.

Die Figur zeigt einen Sender 1 und einen Empfänger 2. Nur der Sender 1 und der Empfänger 2 sind Geräte, weisen also eine körperliche Ausgestaltung auf. Die übrigen Komponenten weisen keine körperliche Ausgestaltung auf. Sie sind also virtuell. Die Darstellung der virtuellen Komponenten dient nur der Veranschaulichung des im Folgenden beschriebenen Verfahrens zum Synchronisieren eines Empfänger-Initialisierungsvektors 3 des Empfängers 2 mit einem Sender-Initialisierungsvektor 4 des Senders 1 bei fortlaufender Übertragung von verschlüsselten Datenpaketen vom Sender 1 zum Empfänger 2.

Zunächst werden ein Schlüssel 5 und ein Initialisierungsvektor erzeugt. Der Initialisierungsvektor weist eine Nonce 6 mit 64 Bit und einen Zähler mit N = 16 Bit auf. Dann wird der Schlüssel 5 sowohl dem Sender 1 als auch dem Empfänger 2 vorgegeben, sodass der Schlüssel vom Sender 1 und vom Empfänger 2 verwendet wird. Weiter werden der Empfänger-Initialisierungsvektor 3 und der Sender-Initialisierungsvektor 4 mit dem Initialisierungsvektor initialisiert. Nach der Initialisierung weist der Empfänger-Initialisierungsvektor 3 die Nonce 6 und einen Empfänger-Zähler 7 und der Sender-Initialisierungsvektor 4 die Nonce 6 und einen Sender-Zähler 8 auf. Der Empfänger-Zähler 7 und der Sender-Zähler 8 sind jeweils 16-Bit-Zähler, die nach der Initialisierung den gleichen Wert aufweisen.

Vom Sender 1 werden die folgenden Schritte ausgeführt:
- Ein Sender-Teilzähler 9 wird mit den niedrigstwertigen M = 8 Bit kleiner als N = 16 Bit aus dem Sender-Zähler 8 gebildet. Der Sender-Teilzähler 9 ist demnach ein 8-Bit-Zähler.
- Eine Nachricht 10 wird gemäß einem Verschlüsselungsverfahren unter Verwendung des Schlüssels 5 und des Sender-Initialisierungsvektors 4 zur Gewährleistung von Vertraulichkeit verschlüsselt. Dazu werden die Nachricht 10, der Schlüssel 5 und der Sender-Initialisierungsvektor 4 eingelesen. Das Verschlüsselungsverfahren setzt einen AES um.
- Ein Nachrichten-Authentifizierungscode 12 wird für die Nachricht 10 zur Gewährleistung von Authentizität und Integrität der Nachricht 10 erzeugt. Zur Erzeugung wird ein CCM-Modus umgesetzt.
- Ein Datenpaket 11 wird mit der verschlüsselten Nachricht 10, dem Sender-Teilzähler 9 und dem Nachrichten-Authentifizierungscode 12 erzeugt und gesendet.
- Der Sender-Zähler 8 wird dann inkrementiert.

Vom Empfänger 2 werden die folgenden Schritte ausgeführt:
- Das Datenpaket 11 mit der verschlüsselten Nachricht 10, dem Sender-Teilzähler 9 und dem Nachrichten-Authentifizierungscode 12 wird empfangen.
- Der Sender-Teilzähler 9 wird aus dem Datenpaket 11 extrahiert.
- Ein Empfänger-Teilzähler 13 wird mit den niedrigstwertigen M = 8 Bit kleiner als N = 16 Bit aus dem Empfänger-Zähler 7 gebildet. Der Empfänger-Teilzähler 13 ist demnach ein 8-Bit-Zähler.
- Ein Vergleich zwischen dem Empfänger-Teilzähler 13 und dem Sender-Teilzähler 9 wird durchgeführt.
- Wenn der Vergleich einen höheren Sender-Teilzähler 9 als Empfänger-Teilzähler 13 ergibt, dann werden die niedrigstwertigen M = 8 Bit des Empfänger-Zählers 7 durch den Sender-Teilzähler 9 ersetzt.
- Wenn der Vergleich einen niedrigeren Sender-Teilzähler 9 als Empfänger-Teilzähler 13 ergibt, dann werden die niedrigstwertigen M = 8 Bit des Empfänger-Zählers 7 durch den Sender-Teilzähler 9 ersetzt und wird danach der Wert des Empfänger-Zählers 7 um 2^{M} = 2⁸ erhöht.
- Authentizität und Integrität der Nachricht 10 werden durch Auswertung des Nachrichten-Authentifizierungscodes 12 überprüft.
- Die Nachricht 10 wird gemäß dem Verschlüsselungsverfahren unter Verwendung des Schlüssels 5 und des Empfänger-Initialisierungsvektors 3 entschlüsselt. Dazu wird der Schlüssel 5 eingelesen. Die entschlüsselte Nachricht 10 wird ausgegeben. Dann der Empfänger-Zähler 7 inkrementiert.

Die letzten beiden Schritte erfolgen nachdem sichergestellt worden ist, dass der Empfänger- und der Sender-Initialisierungsvektor übereinstimmen. Eine Übertragung des Datenpakets 11 vom Sender 1 zum Empfänger 2, also das Senden und das Empfangen, erfolgt dabei unter Verwendung von Bluetooth Low Energy.

### Bezugszeichen

- 1: Sender
- 2: Empfänger
- 3: Empfänger-Initialisierungsvektor
- 4: Sender-Initialisierungsvektor
- 5: Schlüssel
- 6: Nonce
- 7: Empfänger-Zähler
- 8: Sender-Zähler
- 9: Sender-Teilzähler
- 10: Nachricht
- 11: Datenpaket
- 12: Nachrichten-Authentifizierungscode
- 13: Empfänger-Teilzähler

## Patentansprüche

1. Verfahren zum Synchronisieren eines Empfänger-Initialisierungsvektors (3) eines Empfängers (2) mit einem Sender-Initialisierungsvektor (4) eines Senders (1) bei fortlaufender Übertragung von verschlüsselten Datenpaketen (11) vom Sender (1) zum Empfänger (2),
wobei zum einen ein Schlüssel (5) und zum anderen ein Initialisierungsvektor mit einem Zähler mit N Bit erzeugt wird,
wobei der Schlüssel (5) dem Sender (1) und dem Empfänger (2) vorgegeben wird und der Sender-Initialisierungsvektor (4) und der Empfänger-Initialisierungsvektor (3) mit dem Initialisierungsvektor initialisiert werden,
wobei vom Sender (1)
- ein Sender-Teilzähler (9) mit den niedrigstwertigen M Bit kleiner als N Bit aus dem Zähler (8) des Sender-Initialisierungsvektors (4) gebildet wird,
- eine Nachricht (10) gemäß einem Verschlüsselungsverfahren unter Verwendung des Schlüssels (5) und des Sender-Initialisierungsvektors (4) zur Gewährleistung von Vertraulichkeit verschlüsselt wird,
- ein Datenpaket (11) mit der verschlüsselten Nachricht (10) und dem Sender-Teilzähler (9) erzeugt und gesendet wird und
- danach der Zähler (8) des Sender-Initialisierungsvektors (4) inkrementiert wird,
wobei vom Empfänger (2)
- ein Datenpaket (11) mit einer verschlüsselten Nachricht (10) und einem Sender-Teilzähler (9) empfangen wird,
- der Sender-Teilzähler (9) aus dem Datenpaket (11) extrahiert wird,
- ein Empfänger-Teilzähler (13) mit den niedrigstwertigen M Bit kleiner als N Bit aus dem Zähler (7) des Empfänger-Initialisierungsvektors (3) gebildet wird,
- ein Vergleich zwischen dem Empfänger-Teilzähler (13) und dem Sender-Teilzähler (9) durchgeführt wird,
- wenn der Vergleich einen höheren Sender-Teilzähler (9) als Empfänger-Teilzähler (13) ergibt, die niedrigstwertigen M Bit des Zählers (7) des Empfänger-Initialisierungsvektors (3) durch den Sender-Teilzähler (9) ersetzt werden,
- wenn der Vergleich einen niedrigeren Sender-Teilzähler (9) als Empfänger-Teilzähler (13) ergibt, die niedrigstwertigen M Bit des Zählers (7) des Empfänger-Initialisierungsvektors (3) durch den Sender-Teilzähler (9) ersetzt werden und der Wert des Zählers (7) des Empfänger-Initialisierungsvektors (3) danach um 2^{M} erhöht wird,
- danach die Nachricht (10) gemäß dem Verschlüsselungsverfahren unter Verwendung des Schlüssels (5) und des Empfänger-Initialisierungsvektors (3) entschlüsselt und dann der Zähler (7) des Empfänger-Initialisierungsvektors (3) inkrementiert wird.

2. Verfahren nach Anspruch 1, wobei vom Empfänger (2) überprüft wird, ob die Entschlüsselung erfolgreich ist, und, wenn die Entschlüsselung nicht erfolgreich ist, der Wert des Zählers (7) des Empfänger-Initialisierungsvektors (3) um weitere 2^{M} erhöht wird und die Nachricht (10) dann erneut gemäß dem Verschlüsselungsverfahren unter Verwendung des Schlüssels (5) und des Empfänger-Initialisierungsvektors (3) entschlüsselt wird.

3. Verfahren nach Anspruch 1 oder 2, wobei von einem Initialisierer der Schlüssel (5) und der Initialisierungsvektor erzeugt und dem Sender (1) und dem Empfänger (2) vorgegeben werden.

4. Verfahren nach einem der Ansprüche 1 bis 3, wobei das Verschlüsselungsverfahren einen Advanced Encryption Standard umsetzt.

5. Verfahren nach einem der Ansprüche 1 bis 4, wobei vom Sender (1) zum einen ein Nachrichten-Authentifizierungscode (12) für die Nachricht (10) zur Gewährleistung von Authentizität und/oder Integrität der Nachricht (10) und zum anderen das Datenpaket (11) mit dem Nachrichten-Authentifizierungscode (12) erzeugt werden und vom Empfänger (2) dementsprechend Authentizität und/oder Integrität der Nachricht (10) durch Auswertung des Nachrichten-Authentifizierungscodes (12) überprüft werden bzw. wird.

6. Verfahren nach einem der Ansprüche 1 bis 4, wobei vom Sender (1) zum einen ein Nachrichten-Authentifizierungscode (12) für die Nachricht (10) und den Sender-Teilzähler (9) zur Gewährleistung von Authentizität und/oder Integrität der Nachricht (10) und des Sender-Teilzählers (9) und zum anderen das Datenpaket (11) mit dem Nachrichten-Authentifizierungscode (12) erzeugt werden und vom Empfänger (2) dementsprechend Authentizität und/oder Integrität der Nachricht (10) und des Sender-Teilzählers (9) durch Auswertung des Nachrichten-Authentifizierungscodes (12) überprüft werden bzw. wird.

7. Verfahren nach Anspruch 5 oder 6, wobei vom Sender (1) und vom Empfänger (2) zur Erzeugung und Überprüfung des Nachrichten-Authentifizierungscodes (12) ein CCM- oder ein GCM-Modus, vorzugsweise mit einem AES, umgesetzt werden.

8. Verfahren nach einem der Ansprüche 1 bis 7, wobei der Initialisierungsvektor mit einer Nonce (6) zur Verbesserung der Gewährleistung der Vertraulichkeit bzw. der Authentizität und Integrität erzeugt wird.

9. Verfahren nach einem der Ansprüche 1 bis 8, wobei zur Übertragung von Datenpaketen (11) vom Sender (1) zum Empfänger (2) eine Funktechnik, vorzugsweise Bluetooth Low Energy, verwendet wird.

## Claims

1. Method for synchronizing a receiver initialization vector (3) of a receiver (2) with a transmitter initialization vector (4) of a transmitter (1) during continuous transmission of encrypted data packets (11) from the transmitter (1) to the receiver (2),
wherein, on the one hand, a key (5) and, on the other hand, an initialization vector with a counter with N bits are generated,
wherein the key (5) is provided to the transmitter (1) and the receiver (2) and the transmitter initialization vector (4) and the receiver initialization vector (3) are initialized with the initialization vector,
wherein by the transmitter (1)
- a transmitter partial counter (9) with the lowest value M bits less than N bits is formed from the counter (8) of the transmitter initialization vector (4),
- a message (10) is encrypted according to an encryption method using the key (5) and the transmitter initialization vector (4) to ensure confidentiality
- a data packet (11) containing the encrypted message (10) and the transmitter partial counter (9) is generated and transmitted, and
- thereafter the counter (8) of the transmitter initialization vector (4) is incremented,
wherein by the receiver (2)
- a data packet (11) with an encrypted message (10) and a transmitter partial counter (9) is received,
- the transmitter partial counter (9) is extracted from the data packet (11),
- a receiver partial counter (13) with the lowest value M bits less than N bits is formed from the counter (7) of the receiver initialization vector (3)
- a comparison is made between the receiver partial counter (13) and the transmitter partial counter (9),
- if the comparison results in a higher transmitter partial counter (9) than receiver partial counter (13), the lowest value M bits of the counter (7) of the receiver initialization vector (3) are replaced by the transmitter partial counter (9),
- if the comparison yields a lower transmitter partial counter (9) than receiver partial counter (13), the lowest value M bits of the counter (7) of the receiver initialization vector (3) are replaced by the transmitter partial counter (9) and the value of the counter (7) of the receiver initialization vector (3) is then increased by 2^{M},
- thereafter the message (10) is decrypted according to the encryption method using the key (5) and the receiver initialization vector (3), and then the counter (7) of the receiver initialization vector (3) is incremented.

2. Method according to claim 1, wherein it is checked by the receiver (2) whether the decryption is successful and, if the decryption is not successful, the value of the counter (7) of the receiver initialization vector (3) is incremented by another 2^{M} and the message (10) is then decrypted again according to the encryption method using the key (5) and the receiver initialization vector (3).

3. Method according to claim 1 or 2, wherein the key (5) and the initialization vector are generated by an initializer and provided to the transmitter (1) and the receiver (2).

4. Method according to any one of claims 1 to 3, wherein the encryption method implements an Advanced Encryption Standard.

5. Method according to any one of claims 1 to 4, wherein, on the one hand, a message authentication code (12) for the message (10) is generated by the transmitter (1) to ensure authenticity and/or integrity of the message (10) and, on the other hand, the data packet (11) with the message authentication code (12) is generated and, accordingly, authenticity and/or integrity of the message (10) is/are checked by the receiver (2) by evaluating the message authentication code (12).

6. Method according to any one of claims 1 to 4, wherein, on the one hand, a message authentication code (12) for the message (10) and the transmitter partial counter (9) for ensuring authenticity and/or integrity of the message (10) and of the transmitter partial counter (9) and, on the other hand, the data packet (11) with the message authentication code (12) are generated by the transmitter (1) and, accordingly, authenticity and/or integrity of the message (10) and of the transmitter partial counter (9) is/are checked by the receiver (2) by evaluating the message authentication code (12).

7. Method according to claim 5 or 6, wherein a CCM or a GCM mode, preferably with an AES, is implemented by the transmitter (1) and the receiver (2) for generating and checking the message authentication code (12).

8. Method according to any one of claims 1 to 7, wherein the initialization vector is generated with a nonce (6) in order to improve the assurance of confidentiality or authenticity and integrity.

9. Method according to any one of claims 1 to 8, wherein a radio technology, preferably Bluetooth Low Energy, is used to transmit data packets (11) from the transmitter (1) to the receiver (2).

## Revendications

1. Procédé de synchronisation d'un vecteur d'initialisation de récepteur (3) d'un récepteur (2) avec un vecteur d'initialisation d'émetteur (4) d'un émetteur (1) lors d'une transmission continue de paquets de données (11) cryptés de l'émetteur (1) vers le récepteur (2),
une clé (5) d'une part et un vecteur d'initialisation d'autre part étant générés avec un compteur de N bits ; la clé (5) étant préattribuée à l'émetteur (1) et au récepteur (2) et le vecteur d'initialisation d'émetteur (4) et le vecteur d'initialisation de récepteur (3) étant initialisés avec le vecteur d'initialisation, l'émetteur (1)
- formant un compteur partiel d'émetteur (9) dont les M bits de poids faible sont inférieurs à N bits issus du compteur (8) du vecteur d'initialisation d'émetteur (4),
- cryptant un message (10) conformément à un procédé de cryptage en utilisant la clé (5) et le vecteur d'initialisation d'émetteur (4) en vue de garantir la confidentialité,
- générant et envoyant un paquet de données (11) avec le message (10) crypté et le compteur partiel d'émetteur (9) et
- incrémentant ensuite le compteur (8) du vecteur d'initialisation d'émetteur (4),
le récepteur (2)
- recevant un paquet de données (11) comprenant un message (10) crypté et un compteur partiel d'émetteur (9),
- extrayant le compteur partiel d'émetteur (9) du paquet de données (11),
- formant un compteur partiel de récepteur (13) dont les M bits de poids faible sont inférieurs à N bits issus du compteur (7) du vecteur d'initialisation de récepteur (3),
- effectuant une comparaison entre le compteur partiel de récepteur (13) et le compteur partiel d'émetteur (9),
- lorsque la comparaison produit un compteur partiel d'émetteur (9) plus élevé que le compteur partiel de récepteur (13), remplaçant les M bits de poids faible du compteur (7) du vecteur d'initialisation de récepteur (3) par le compteur partiel d'émetteur (9),
- lorsque la comparaison produit un compteur partiel d'émetteur (9) plus faible que le compteur partiel de récepteur (13), remplaçant les M bits de poids faible du compteur (7) du vecteur d'initialisation de récepteur (3) par le compteur partiel d'émetteur (9) et augmentant ensuite de 2^{M} la valeur du compteur (7) du vecteur d'initialisation de récepteur (3),
- décryptant ensuite le message (10) conformément au procédé de cryptage en utilisant la clé (5) et le vecteur d'initialisation de récepteur (3) et incrémentant ensuite le compteur (7) du vecteur d'initialisation de récepteur (3).

2. Procédé selon la revendication 1, le récepteur (2) vérifiant si le décryptage a réussi et, si le décryptage n'a pas réussi, augmentant de 2^{M} supplémentaires la valeur du compteur (7) du vecteur d'initialisation de récepteur (3) et décryptant ensuite de nouveau le message (10) conformément au procédé de cryptage en utilisant la clé (5) et le vecteur d'initialisation de récepteur (3).

3. Procédé selon la revendication 1 ou 2, la clé (5) et le vecteur d'initialisation étant générés et préattribués à l'émetteur (1) et au récepteur (2) avant une initialisation.

4. Procédé selon l'une des revendications 1 à 3, le procédé de cryptage mettant en œuvre une norme de cryptage avancée.

5. Procédé selon l'une des revendications 1 à 4, l'émetteur (1) générant d'une part un code d'authentification de message (12) pour le message (10) en vue de garantir l'authenticité et/ou l'intégrité du message (10) et d'autre part le paquet de données (11) avec le code d'authentification de message (12) et le récepteur (2) vérifiant en conséquence l'authenticité et/ou l'intégrité du message (10) en interprétant le code d'authentification de message (12).

6. Procédé selon l'une des revendications 1 à 4, l'émetteur (1) générant d'une part un code d'authentification de message (12) pour le message (10) et le compteur partiel d'émetteur (9) en vue de garantir l'authenticité et/ou l'intégrité du message (10) et du compteur partiel d'émetteur (9) et d'autre part le paquet de données (11) avec le code d'authentification de message (12) et le récepteur (2) vérifiant en conséquence l'authenticité et/ou l'intégrité du message (10) et du compteur partiel d'émetteur (9) en interprétant le code d'authentification de message (12).

7. Procédé selon la revendication 5 ou 6, l'émetteur (1) et le récepteur (2), en vue de générer et de vérifier le code d'authentification de message (12), mettant en œuvre un mode CCM ou GCM, de préférence avec une norme AES.

8. Procédé selon l'une des revendications 1 à 7, le vecteur d'initialisation étant généré avec un nombre aléatoire (6) en vue d'améliorer la garantie de la confidentialité ou de l'authenticité et de l'intégrité.

9. Procédé selon l'une des revendications 1 à 8, une technique de radiocommunication, de préférence le Bluetooth à basse consommation, étant utilisée pour la transmission de paquets de données (11) de l'émetteur (1) au récepteur (2).
